# EUROPEAN PATENT SPECIFICATION

(11) **EP 4 386 233 B1**
(45) Date of publication and mention of the grant of the patent: **14.10.2026**
(21) Application number: 22214243.2
(22) Date of filing: 16.12.2022
(51) Int. Cl.: F16H 25/22, F16D 65/14, F16D 65/18, B60T 13/74, F16D 125/48, F16D 125/64, F16H 25/20, F16D 121/24, F16D 125/40

(54) **ELECTRO-MECHANICAL ACTUATOR ASSEMBLY FOR ACTUATING A BRAKE ACTUATOR, BRAKE ASSEMBLY AND VEHICLE**
ELEKTROMECHANISCHE AKTUATORANORDNUNG ZUR BETÄTIGUNG EINES BREMSAKTUATORS, BREMSANORDNUNG UND FAHRZEUG
ENSEMBLE ACTIONNEUR ÉLECTROMÉCANIQUE POUR ACTIONNER UN ACTIONNEUR DE FREIN, ENSEMBLE FREIN ET VÉHICULE

(43) Date of publication of application: 19.06.2024
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 85652 Pliening (DE); HÖS, Levente, 1047 Budapest (HU); HOLLOSI, Mate, 1097 Budapest (HU); KLINGNER, Matthias, 82275 Emmering (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU)

(56) References cited:
- CN-A- 114 423 961
- JP-A- 2020 133 693
- US-A1- 2012 090 418
- US-A1- 2019 329 752
- US-A1- 2022 364 618

## Description

The present invention relates to an electro-mechanical actuator assembly for actuating a brake actuator, a brake assembly comprising such electro-mechanical actuator assembly, and a vehicle comprising such electro-mechanical actuator assembly or such brake assembly.

Pneumatic brake systems are widely utilized for commercial vehicle retardation. Floating caliper disc brakes are the most common foundation brake solutions within these systems for wheel end brake torque application. Pneumatic actuators are attached to these calipers via a simple flange and nuts. Thanks to this interface, these actuators can be exchanged on a modular way, supporting system setup for different brake performances based on the actuator power.

The electro-mechanical brake actuation principle is about to penetrate commercial vehicle market. Since the vehicle suspension and axle compartment together with the brake components is already given, the electro-mechanical brake actuation is limited in the degrees of freedom in design.

Further, brake calipers or braking members in general may be actuated by a brake actuator such as a rotating lever, wherein a specific contact surface or interface to receive an actuation, e.g. by a pushrod as part of an actuation assembly, moves along a curved trajectory due rotation of the rotating lever during a braking action. This may result in additional loads on the actuation mechanism.

In this context, US 2022/364618 A1 relates to a ball screw assembly having a ball screw nut including an outer surface, an inner surface defining a central bore, and a ball track defined by the inner surface, a ball screw shaft including an outer surface defining a ball track, the ball screw shaft being disposed in the central bore so that the two ball tracks form a ball raceway, a first stopper disposed at a first end of the ball screw nut within the ball raceway, a plurality of main balls forming a ball train disposed in the ball raceway, a main spring assembly disposed in the ball raceway between a first end of the ball train and the first stopper, and a strain sensing element affixed to a flat surface portion defined by the outer surface of the ball screw nut.

US 2012/090418 A1 relates to a ball screw having a threaded nut which is arranged on a threaded spindle and having a stop for the circumferential abutment of the threaded nut in its stop position provided on the threaded spindle. The stop has a first stop surface assigned to the threaded nut and has a second stop surface which is provided for abutting against the first stop surface and which is assigned to the threaded spindle, and, in the stop position, an axial overlap of the first stop surface with the second stop surface is provided, which overlap amounts to between 20% and 85% of the pitch of the threaded spindle.

It is an object of the present invention to allow the implementation of an electro-mechanical brake actuation with reduced loads on the actuation mechanism.

The object is solved by the subject matters of the independent claim 1. Further aspects of the present invention are subject to the dependent claims.

According to the present invention an electro-mechanical actuator assembly for actuating a brake actuator comprises an actuation mechanism configured to convert a rotational driving movement into a translational driven movement in a direction of a first longitudinal axis, and a transfer mechanism operatively coupled to the actuation mechanism to receive and transfer the translational driven movement at least in the direction of the first longitudinal axis. The actuation mechanism is a spindle-spindle nut mechanism, wherein a spindle of the spindle-spindle nut mechanism extends along the first longitudinal axis and is rotationally supported about the first longitudinal axis while being axially fixed. Further, the spindle nut is configured to be axially moveable with respect to the first longitudinal axis while being rotationally fixed.

For example, the transfer mechanism is axially driven by the actuation mechanism in the direction of the first longitudinal direction to move a brake actuator, such as a brake lever, in a braking direction. The brake actuator moved in the braking direction actuates a brake or braking member, such as a brake caliper, e.g. a floating caliper, to brake a brake disc. Since the spindle nut is axially movable to actuate the brake actuator via the transfer mechanism instead of the spindle, any force in reaction of such actuation is preferably absorbed by the transfer mechanism and/or the spindle nut to prevent to spindle from being deformed or otherwise affected.

According to the invention, the spindle is operatively connected to a driving device, preferably an electric motor, to be driven by the driving device directly or via at least one gear stage arranged between the driving device and the spindle.

Accordingly, the driving device, specifically a rotary driving device, drives the spindle to rotate to axially drive the spindle nut. The driving device may be directly or indirectly connected to the spindle. In this context but also in general, the term "operatively connected" or "operatively coupled" refers to a direct or indirect connection or coupling. For example, an indirect connection or coupling may comprise at least one intermediate component, e.g. to convert a movement and/or to bridge distances, arranged between the members to be operatively connected coupled. With respect to the spindle being operatively connected to the driving device, at least one gear stage may be arranged between the driving device and the spindle. The at least one gear stage may allow to convert a rotational speed of the driving device into a different rotational speed of the spindle. Preferably, the at least one gear stage is configured to lower the rotational speed of the spindle with respect to the rotational speed of the driving device. With the driving device being or at least comprising an electric motor, driving of the spindle can be implemented in an easy manner.

According to the invention, the driving device comprises a driving device shaft extending in a direction of a second longitudinal axis, preferably in parallel to the first longitudinal axis.

The second longitudinal axis may be coaxially aligned with the first longitudinal axis, for example in series with the spindle. However, due to spatial constraints for installation or to reduce the size of the electro-mechanical actuator assembly in the direction of the first longitudinal axis, the driving device shaft and therefore the second longitudinal axis may be arranged to extend in parallel to the first longitudinal axis. In such configuration the driving device shaft and the spindle may be operatively coupled via the at least one gear stage, wherein the at least one gear stage may only be provided to transfer the rotational movement of the driving device shaft to the spindle with the same rotational speed but may alternatively convert the rotational speed.

According to the invention, the driving device shaft and the spindle extend substantially in one plane, and the electro-mechanical actuator assembly further comprises at least one control device, preferably at least one electronic control device, arranged laterally to the plane and operatively connected to the driving device.

According to the invention, the control device is placed sidewise on the electro-mechanical actuator assembly. This allows the installation space to be further reduced in the direction of the first longitudinal axis.

According to the present invention as claimed, the electro-mechanical actuator assembly comprises at least two control devices arranged on opposite sides of the plane.

For example, the control devices may thereby form a control unit spilt in two parts. The control devices may be arranged that the electro-mechanical actuator assembly remains quasi-symmetric. Preferably the symmetry plane of the arrangement of the control devices corresponds to a brake caliper symmetry plane. The brake caliper symmetry plane is a symmetry plane substantially perpendicular to plane in which the braking surfaces of the brake caliper extend or a braking plane, respectively.

In some embodiments, at least one of the at least two control devices is a control unit configured to control operatively connected components, and the other at least one of the at least two control devices is a power control unit configured to control a power supply to operatively connected components.

Accordingly, in the event of any failure of one of the at least two control devices, a redundancy to provide respective back-up functionalities may be easier implemented by separating types of functionalities to be assigned to one of the control devices or the other.

In some embodiments, the spindle-spindle nut mechanism is a ball screw.

For example, the spindle-spindle nut mechanism is a recirculating ball-spindle based actuator, wherein the spindle is extending in the direction of the first longitudinal axis, preferably coaxially therewith, and is rotationally supported by at least one spindle bearing to allow a rotational movement of the spindle about the first longitudinal axis or an axis in parallel to the first longitudinal axis but keeping the spindle axially stationary with respect to the direction of the first longitudinal axis. The spindle nut starts moving axially with respect to the first longitudinal axis by the rotational movement of the spindle. To prevent the spindle nut from rotating together with the spindle and being rotationally stationary, the spindle nut may comprise at least one spindle support pin projecting radially with respect to the first longitudinal axis. The at least one pin may be received in a guiding groove of a housing, in which the spindle nut is received, or of another stationary component. The guiding groove extends in the direction of the axial movement of the spindle nut. By the axial movement of the spindle nut, the transfer mechanism is also moved in the axial direction. However, in other embodiments, the spindle-spindle nut mechanism may be another actuation mechanism configured to convert a rotational driving movement into a translational driven movement in a direction of a first longitudinal axis, such as a threaded mechanism.

Preferably, the electro-mechanical actuator assembly further comprises an electro-mechanical linear actuator configured and controlled to lock the spindle against a rotational movement.

For example, the electro-mechanical linear actuator may be configured to be moved against the spindle to lock or brake the spindle against a rotational movement by providing a form fit and/or force fit connection. However, in other embodiments, such locking may be alternatively or in addition provided by another locking mechanism such as a pneumatic locking mechanism. By locking the spindle against a rotational movement, a force acting on the spindle nut in the axial direction with respect to the first longitudinal axis does not cause the spindle nut or the spindle to move.

In some embodiments, the driving device shaft at least partially overlaps the spindle in the direction of the second longitudinal axis.

By the driving device shaft and the spindle at least partially overlapping, the installation space can be reduced in the direction of the first longitudinal axis resulting in a compact design in such direction. For example, the first longitudinal axis and the second longitudinal axis are arranged in parallel to each other. Further, the driving device shaft and the spindle are arranged such that the shorter one of the driving device shaft or the spindle is not extending beyond the longer one of the driving device shaft or the spindle with respect to the first longitudinal axis or the second longitudinal axis, respectively. For the driving device shaft and the spindle being substantially equal in length with respect to the respective first and second longitudinal axis, preferably none of the driving device shaft and the spindle is extending beyond the other one. The first longitudinal axis and the second longitudinal axis may be arranged to extend in a horizontal plane or a vertical plane upon being installed.

In some embodiments, the electro-mechanical actuator assembly further comprises a locking unit, preferably an electro-mechanical linear actuator or a locking clutch, more preferably a bi-stable brake, configured and controlled to lock the driving device shaft against a rotational movement.

By locking the driving device shaft, any unintentional movement of the spindle may be prevented. In turn, any rotational movement of the spindle does not cause the driving device shaft operatively connected to the spindle to rotate, which may affect the driving device. The locking unit is preferably configured to lock by a form fit connection.

Specifically, the locking unit is configured as a parking brake, specifically a parking brake clutch, coupled to the driving device shaft to lock the driving device rotation in a predetermined position. Preferably, the brake is pretensioned in the predetermined position, so that a parking brake function is realized.

In some embodiments, the at least one control device is operatively connected to the locking unit as previously described.

In some embodiments, the transfer mechanism comprises at least one pushing member having a pushing member pivot portion configured to allow a tilting movement of the pushing member about a pivot axis inclined to the first longitudinal axis.

For example, as previously addressed, the pushing member may be a push rod, axially driven by the actuation mechanism in the direction of the first longitudinal direction to move a brake actuator, such as a brake lever, in a braking direction. The brake actuator moved in the braking direction actuates a brake or braking member, such as a brake caliper, e.g. a floating caliper, to brake a brake disc. A brake lever as the brake actuator may thereby be rotated about a pivot axis extending in a direction inclined, particularly substantially perpendicular, to the first longitudinal axis, but not intersecting the first longitudinal axis and thereby distanced therefrom. The brake actuator and the pushing member may each comprise an engaging interface configured to engage with each other such that the pushing member is engaged with the brake actuator during a braking movement. Since the brake actuator rotates about the pivot axis, the interface of the brake actuator moves along a curved trajectory. Accordingly, the pushing member in engagement with the brake actuator comprises a pushing member pivot portion to allow a tilting movement of the pushing member about a respective pivot axis inclined, particularly substantially perpendicular, to the first longitudinal axis. The pivot axis of the pushing member is preferably substantially in parallel to the pivot axis of the brake actuator. Here and in general, the term "substantially" generally relates to tolerances in manufacturing and/or assembling as well as any other slight deviations that do not interfere with basic principles provided by respective configurations.

Due to the actuation mechanism configured to convert a rotational driving movement into a translational driven movement in the direction of the first longitudinal axis, and the transfer mechanism operatively coupled to the actuation mechanism to receive and transfer the translational driven movement at least in the direction of the first longitudinal axis, the actuation mechanism is capable of being retrofitted in a brake assembly when exchanging a linear drive with a rotary drive within a given brake actuator and/or brake configuration. Further the ability of the pushing member to provide a tilting movement allows to further reduce loads on the pushing member, which may otherwise result in deformations or other damages of the pushing member or components subsequent thereof in a direction away from the brake actuator, and/or on the brake actuator.

In some embodiments, the pushing member comprises a pushing member body with one end comprising the pushing member pivot portion and an opposed end comprising a pushing member head, preferably an exchangeable and/or at least partially spherical pushing member head, configured to engage with a brake actuator for a respective actuation of the brake actuator.

Accordingly, the pushing member extends along a pushing member longitudinal axis from the one end comprising the pushing member pivot portion to the other end comprising the pushing member head. For example, the pushing member longitudinal axis may be coaxially with the first longitudinal axis, and the pushing member body extends at least partially circumferentially around the spindle. The pushing member pivot portion may therefore comprise an opening to receive the spindle. Further, the pushing member head may be at least partially of a spherical shape, e.g. a positive hemisphere configured to be received by a corresponding negative hemisphere portion of the brake actuator to receive the pushing member head for engagement. Due to the spherical interface the contact surfaces of the positive hemispherical pushing member head and the negative hemispherical portion of the brake actuator may slide on each other during the movement along the curved trajectory without blocking such movement. However, the pushing member head is not restricted to a hemispherical shape and may provide another shape in accordance with the receiving portion of the brake actuator for an engagement with the pushing member head. Accordingly, it may be advantageous to allow the pushing member head to be exchanged to adapt the pushing member head with respect to different shapes and/or dimensions.

In some embodiments, the pushing member pivot portion comprises at least one pushing member pivot configured as a cylinder portion and/or a spherical portion.

For example, the pushing member pivot formed as a cylinder portion may be received in a corresponding cylinder support allowing the pushing member to rotate about the cylinder axis. The cylinder portion may be formed by a cylinder or at least a section of a cylinder sufficient to allow a predetermined tilting movement of the pushing member. The at least one cylinder portion may extend in the radial direction outward from the pushing member pivot portion with respect to the pushing member longitudinal axis. Preferably, the pushing member pivot portion comprises at least two pushing member pivots as cylinder portions evenly distributed along the radial surface of the pushing member pivot portion with respect to the pushing member longitudinal axis. Due to the at least two pushing member pivots as cylinder portions, the pushing member may be more stably supported.

Alternatively or in addition, the pushing member pivot may comprise a spherical portion forming a ball joint or at least a ball joint section. Accordingly, the spherical portion may only be partially spherical. Due to the ball joint or ball joint section, respectively, the degrees of freedom for a tilting movement may be increased. In particular, the pushing member may thereby be rotatable in any direction as long as not interfering with other components. The spherical portion may be formed with the pushing member longitudinal axis as symmetry axis.

In some embodiments, the transfer mechanism comprises a guiding device configured to at least partially receive and support the pushing member pivot portion and to translationally move the pushing member in accordance with the driven translational movement by the actuation mechanism.

Accordingly, the pushing member is translationally moved in the direction of the first longitudinal axis by the guiding device at least partially receiving and supporting the pushing member pivot portion to allow the tilting movement of the pushing member. For example, the guiding device may be of an annular shape arranged around the spindle and provides a contact surface for or is operatively connected to the spindle nut to be axially moved along the spindle in correspondence with a respective axial movement of the spindle nut. In other words, the spindle nut may not have to be configured to at least partially receive and support the pushing member pivot potion and a respective translational movement since the guiding device may be easily adapted to both, the pushing member and the spindle nut, similar to an adapter.

In some embodiments, the guiding device comprises at least one axial bearing arranged at a radial outer surface of the guiding device and configured for a guided axial movement of the guiding device with respect to the first longitudinal axis.

Due to a braking operation with the pushing member being in engagement with the brake actuator, a force is applied on the pushing member and therefore other subsequent components operatively connected thereto. In particular, since the pushing member is tilted in engagement with the brake actuator by the brake actuator being moved on a curved trajectory, respective forces or force components, respectively, may act on the pushing member and, for example, the guiding device. Further, the actuation of a brake by the brake actuator may cause respective reaction forces. Specifically, axial forces may therefore occur. Accordingly, the at least one axial bearing arranged at a radial outer surface, i.e. extending at least partially around an outer radial circumference, of the guiding device may absorb axial forces while guiding the axial movement of the guiding device. The at least one axial bearing may therefore be supported radially inside a housing at least partially accommodating the spindle. Due to the force absorption by the at least one axial bearing, axial forces may not have sufficient influence to cause deformations or other damages on the spindle. Accordingly, the spindle design may be optimized without taking care about potential axial forces transferred via the pushing member. Further, the axial bearing or another bearing may also be provided with respect to radial forces.

The present invention is not limited to concrete axial bearings. Here, any bearing capable of supporting axial forces may be understood as axial bearing. However, concrete axial bearings may be advantageous to increase the capability of a respective support.

In some embodiments, the guiding device as previously described and/or the spindle nut as previously described are/is configured to receive and support the at least one pushing member pivot for the tilting movement of the pushing member.

Accordingly, the guiding device and/or the spindle nut may comprise at least one pushing member pivot receiving portion, such as a recess or another corresponding contour, to receive and support the at least one pushing member pivot.

In some embodiments, the guiding device comprises a first guiding device member and a second guiding device member, wherein the first guiding device member and the second guiding device member are connectable to each other to support the at least one pushing member pivot for the tilting movement of the pushing member.

Accordingly, the pushing member receiving portion may be formed by connecting the first guiding device member and the second guiding device member. For example, the second guiding device member may comprise a cylindrical pin extending radial outward with respect to the pushing member longitudinal axis and the pushing member pivot is formed as a half-cylindrical arc with the inner contour of the arc corresponding to the outer contour of the cylindrical pin. The half-cylindrical arc is placed on the cylindrical pin, and the first guiding member is connected to the second guiding device member. The first guiding device member may comprise at least one first guiding device member recess in the outer circumference extending in the axial direction, wherein a closed end of the first guiding device member recess provides a contour corresponding to the outer contour of the half-cylindrical arc. The first and second guiding device members are configured and connected such that the half-cylindrical arc of the pushing member pivot is sandwiched between the cylindrical pin of the second guiding device member and the closed end of the first guiding device member. This allows a simplified assembling. Further, splitting the guiding device into at least the first guiding device member and the second guiding device member may also allow an exchange of the pushing member and/or the adaption to different pushing members.

Alternatively or in addition, the pushing member pivot is held in the pushing member receiving portion of one of the first and second guiding device members by connecting the other one of the first and second guiding device members to the one of the first and second guiding device members.

According to another aspect, the present invention relates to a brake assembly, comprising at least one electro-mechanical actuator assembly as previously described, and at least one brake actuator configured to actuate or release a brake upon being actuated by the electro-mechanical actuator assembly.

As previously described, the at least one brake actuator may be a brake lever to pivot about a pivot inclined, preferably substantially perpendicular, to the first longitudinal axis.

In some embodiments, the brake assembly further comprises a brake caliper actuatable by the at least one brake actuator, wherein the at least one brake caliper provides a braking plane extending in a direction substantially perpendicular to a braking movement, and wherein the at least one electro-mechanical actuator assembly is arranged with the first longitudinal axis substantially perpendicular to the braking plane, preferably in the brake caliper symmetry plane, with the at least one brake actuator disposed between the at least one electro-mechanical actuator assembly and the brake caliper or inside the brake caliper. The braking plane corresponds to the plane in which the braking surfaces of the brake caliper extend.

Any feature described with respect to the electro-mechanical actuator assembly is also applicable to the brake assembly. In turn, any feature described for the brake assembly is also applicable to the electro-mechanical actuator assembly.

According to another aspect, the present invention relates to a vehicle comprising at least one electro-mechanical actuator assembly as previously described and/or a brake assembly as previously described, wherein the vehicle is a commercial vehicle and/or an electrically powered or hybrid vehicle.

For example, the commercial vehicle may be a truck, a trailer, a bus and/or a combination of a towing vehicle and a trailer. Commercial vehicles and electrically powered or hybrid vehicles provide severe installation space constraints, which benefit from the previously described electro-mechanical actuator assembly and/or brake assembly.

Further advantages, aspects and details of the invention are subject to the claims, the following description of exemplary embodiments applying the principles of the invention, and the respective exemplary drawings.
**Figure 1** is a schematic cross-sectional top view of a brake assembly and an electro-mechanical actuator assembly according to an exemplary embodiment of the present invention;
**Figure 2** is a schematic rear view of a brake assembly according to an exemplary embodiment of the present invention;
**Figure 3** is a schematic lateral view of a pushing member according to an exemplary embodiment of the present invention;
**Figure 4** is a schematic top view of the pushing member according to Figure 3;
**Figure 5** schematic lateral view of a guiding device according to an exemplary embodiment of the present invention; and
**Figure 6** is a schematic cross-sectional top view of the pushing member according to another exemplary embodiment of the present invention.

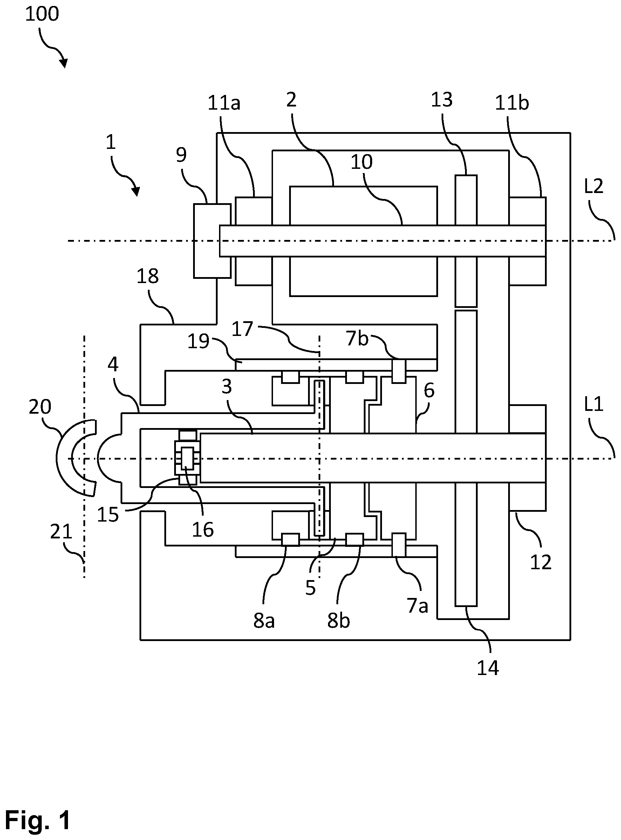

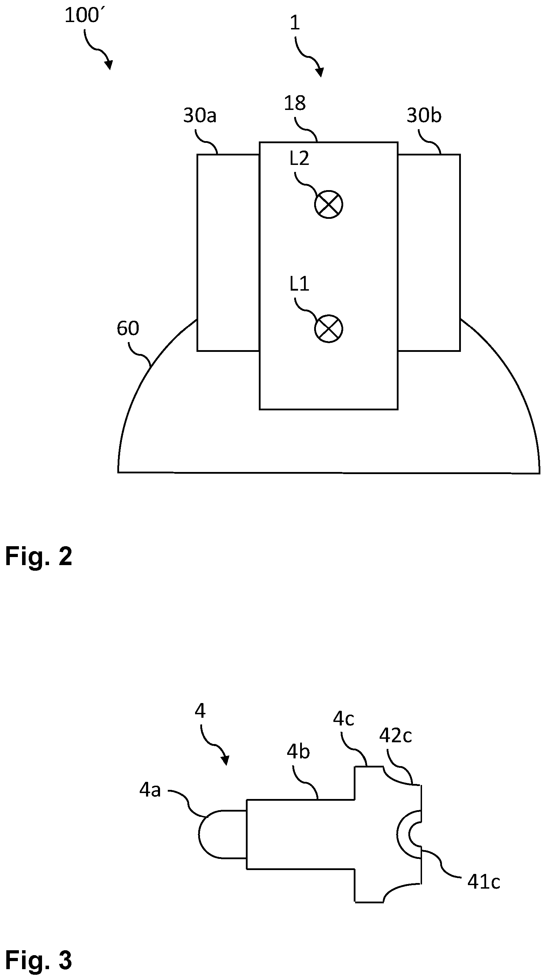

**Figure** 1 shows a schematic cross-sectional top view of a brake assembly 100 and an electro-mechanical actuator assembly 1 according to an exemplary embodiment of the present invention. In Fig. 1, only the electro-mechanical actuator assembly 1 and a brake lever 20 as exemplary brake actuator are shown to be comprised by the brake assembly 100. However, other components may also be comprised by the brake assembly, as, for example, a brake caliper 60 (Fig. 2).

The electro-mechanical actuator assembly 1 comprises a spindle 3 and a spindle nut 6 configured as a recirculating ball spindle mechanism as an exemplary embodiment of an actuation mechanism configured to convert a rotational driving movement into a translational driven movement in a direction of a first longitudinal axis L1. The first longitudinal axis L1 corresponds to the longitudinal axis of the spindle 3. The spindle 3 is driven by an electric motor 2 as driving device comprising a motor shaft 10 as driving device shaft. The motor shaft 10 extends in a direction along a second longitudinal axis L2. The first longitudinal axis L1 is parallel to the second longitudinal axis L2. Further, the motor shaft 10 and the spindle 3 respectively arranged in parallel to each other are positioned such that the shorter motor driving shaft 10 does not extend with one end beyond the spindle 3 to achieve a compact design in the direction of the first longitudinal axis L1 or the second longitudinal axis L2, respectively. In principle, for a compact design, the motor shaft 10 and the spindle 3 are preferably arranged to require minimum space in the direction of the first longitudinal axis L1 or the second longitudinal axis L2, respectively. To drive the spindle 3 by the electric motor 2, the motor shaft 10 comprises a drive gear 13 extending radially with respect to the second longitudinal axis L2, and the spindle 3 comprises a driven gear 14 extending radially with respect to the first longitudinal axis L1. The drive gear 13 and the driven gear 14 are positioned along the motor shaft 10 and the spindle 3, respectively, such that they are in engagement with each other to form a gear stage. In the exemplary embodiment, the gear stage is configured to convert the rotational speed of the motor shaft 10 in a lower rotational speed of the spindle.

The electric motor 2 and the motor shaft 10 are accommodated in a housing 18. The motor shaft 10 is rotationally supported in the housing 18 by motor shaft bearing 11a, 11b, each of which is disposed on one end of the motor shaft 10. Further, the motor shaft 10 can be locked against a rotational movement by a bi-stable brake 9 as locking unit.

The spindle 3 is also accommodated in the housing 18, and rotationally supported by a spindle bearing 12 and a spindle support bearing 15. The bearings 12, 15 are configured to allow the spindle 3 to rotate but prevent the spindle 3 from an axial movement with respect to the first longitudinal axis L1. While the spindle bearing 12 at a driven end of the spindle 3 is directly supported in the housing 18, the spindle support bearing 15 requires a stationary spindle support bearing support 16, here, to bridge the distance between the housing 18 and the spindle support bearing 15 in a direction perpendicular to the drawing plane.

The spindle nut 6 is configured to be axially moved by the spindle 3 with respect to the first longitudinal axis L1. To prevent the spindle nut 6 from a rotational movement, the spindle nut 6 comprises two support pins 7a, 7b extending radially outward in opposing directions from the spindle nut 6 with respect to the first longitudinal axis L1. The support pins 7a, 7b extend into a respective guiding groove 19 to guide the support pins 7a, 7b and thereby the spindle nut 6 during an axial movement in the axial movement direction, while preventing the spindle nut 6 to rotate.

The electro-mechanical actuator assembly 1 further comprises a guiding device 5 and a pushing member 4 as transfer mechanism to receive and transfer the translational driven movement of the spindle nut 6 at least in the direction of the first longitudinal axis L1. Starting from the driven end of the spindle 3 toward the opposed end of the spindle 3 as downstream direction, the guiding device is arranged downstream of the spindle nut 6. The guiding device 10 forms an annular member extending around the spindle 3, and supports the pushing member 4 tiltably connected to the guiding device 5 to be pivotably about a pivot axis 17. The pivot axis 17 is perpendicular to the first longitudinal axis L1 and intersects the first longitudinal axis L1. The pushing member 4 projects from the guiding device 5 in the downstream direction.

The pushing member 4 is intended to engage with the brake lever 20 of the brake assembly 100. In the cross-sectional top view, Figure 1 shows the receiving portion of the brake lever 20 formed in a spherical shape. The brake lever 20 extends in the drawing plane and is pivotable about a pivot axis 21, which is perpendicular to the first longitudinal axis L1 and in parallel to the pivot axis 17 of the pushing member 4. Even though Figure 1 may provide the impression that the pivot axis 21 is intersecting the first longitudinal axis L1, this is merely due to the two-dimensional illustration, while the pivot axis 21 actually extends in a plane below the first longitudinal axis L1 with respect to the drawing plane.

The guiding device 5 is supported in the housing 18 by two axial bearings 8a, 8b, which are arranged at the outer circumference of the guiding device 5 to extend radially around the guiding device 5 with respect to the first longitudinal axis L1.

For a braking operation, the electric motor 2 drives the spindle 3 via the motor shaft 10 and the gear stage 13, 14 to rotate. Accordingly, the spindle nut 6 is translationally moved in a downstream axial direction with respect to the first longitudinal axis L1. Thereby, the guiding device 5 and therefore the pushing member 4 are also moved in the downstream axial direction by the spindle nut 6. Due to the downstream axial movement, the pushing member 4 engages the brake lever 20. Upon a further movement of the pushing member 4 in the downstream axial direction, the brake lever 20 is pivoted about the pivot axis 21 and thereby the contact surface between the brake lever 20 and the pushing member 4 follows a curved trajectory, wherein the pushing member 4 is tilted about the pivot axis 17.

**Figure** 2 shows a schematic rear view of a brake assembly 100" according to an exemplary embodiment of the present invention. Besides the electro-mechanical actuator assembly 1 and the brake lever 20, which is not visible in the given perspective, already previously described, the brake assembly 100 further comprises a brake caliper 60. In the exemplary embodiment, the brake caliper 60 is a floating caliper configured to be actuated by the brake lever 20 arranged between the electro-mechanical actuator assembly 1 and the brake caliper 60. The braking surfaces of the brake caliper 60 extend in a plane substantially perpendicular to the first longitudinal axis L1. Further, in the exemplary embodiment, the electro-mechanical actuator assembly 1 comprises two electronic control units 30a, 30b as control devices. The electronic control units 30a, 30b are attached to the housing 18 on opposed lateral sides of the housing 18. The lateral sides of the housing extend in planes laterally to a plane comprising the first longitudinal axis L1 and the second longitudinal axis L2. One electronic control unit 30a is a control unit configured to control operatively connected components of the electro-mechanical actuator assembly 1, and the other electronic control unit 30b is a power control unit configured to control a power supply to operatively connected components of the electro-mechanical actuator assembly 1. In the brake assembly 100' the electro-mechanical actuator assembly 1 is arranged such that the first longitudinal axis L1 and the second longitudinal axis L2 are oriented in a vertical plane.

**Figure** 3 shows a schematic lateral view of the pushing member 4 according to an exemplary embodiment of the present invention. The pushing member 4 comprises a pushing member body 4b extending in a longitudinal direction from a pushing member head 4a to an opposed pushing member pivot portion 4c. In an assembled state of the electro-mechanical actuator assembly 1, the longitudinal axis of the pushing member body 4b can be brought coaxially with the first longitudinal axis L1. The pushing member head 4a provides a shape and thereby outer contour which corresponds to the receiving portion of the brake lever 20, here, a spherical shape, specifically a hemispherical shape. Since the contour of the receiving portion of the brake lever 20 may change in shape and/or contour in a different brake assembly and/or for other reasons for exchanging the pushing member head 4a, the pushing member head 4a according to the present embodiment is releasable attachable to the pushing member body 4b. However, in other embodiments, the pushing member head 4a may be integrally formed with the pushing member body 4b. For a releasable attachment, the pushing member head 4a is screwed on the pushing member main body 4b. In other embodiments, the pushing member head 4a may be clamped on the pushing member body 4b or may be releasable attached by any other form fit and/or force fit connection.

The pushing member pivot portion 4c comprises two pushing member pivots 41c to form pivots to allow the pushing member 4 to tilt about the pivot axis 17. In the exemplary embodiment, the pushing member pivots 41c are formed as a cylindrical section, specifically a cylindrical arc section. As per the lateral view only one of the pushing member pivots 41c is visible in Figure 2. However, the other pushing member pivot 41c is opposed to the visible pushing member pivot 41c. The pushing member pivot portion 4c further comprises two pushing member pivot recesses 42c configured to allow a predetermined tilting without interfering with another component. In the exemplary embodiment, the pushing member pivot recesses 42c are formed by semicircular cutouts in the pushing member pivot portion 4c. The pushing member pivot recesses 42c are offset from the pushing member pivots 41c in the radial direction with respect to the longitudinal axis by 90°. In other embodiments, the offset may differ from 90°.

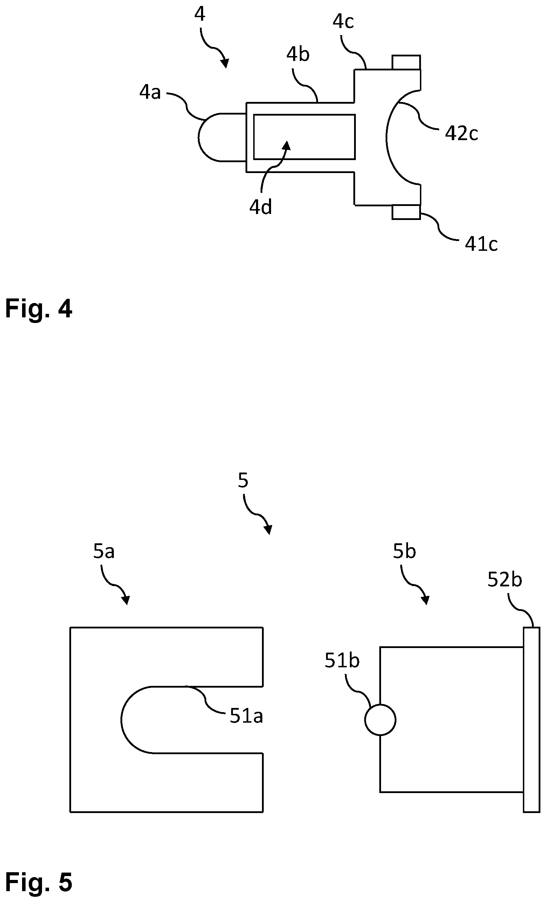

**Figure 4** shows a schematic top view of the pushing member according to Figure 3. According to the top view, the pushing member 4 further comprises a pushing member opening 4d. As per the exemplary embodiment, the pushing member 4 is formed to allow the spindle 3 to at least partially extend in an inner space of the pushing member 4. Further, the pushing member 4 can be moved relatively to the spindle 3 in the axial direction. To support the spindle 3 by the spindle support bearing 15, the pushing member opening 4d allows the spindle support bearing support 16 to extend in the inner space of the pushing member 4 to support the spindle support bearing 15.

**Figure 5** shows a schematic lateral view of the guiding device 5 according to an exemplary embodiment of the present invention. The guiding device 5 comprises a first guiding member device 5a and a second guiding member device 5b. Each of the first and second guiding member devices is substantially formed in a hollow cylindrical shape with an inner diameter allowing the spindle 3 to extend therethrough. In the exemplary embodiment, the first and second guiding member devices 45a, 5b are configured to receive and support the pushing member 4 according to Figures 2 and 3. The first guiding device member 5a comprises two opposed first guiding device member recesses 51a extending in the direction of the first longitudinal axis L1, when assembled. One end of the first guiding device member recesses 51a is open, while the closed end is formed in a hemispherical shape to correspond to the outer contour of the cylindrical pushing member pivots 41c. The second guiding device member 5b comprises two radially outwardly projecting second guiding device member pivots 51b opposed to each other. The second guiding device member pivots 51b are provided as cylindrical pins with an outer diameter corresponding to the inner contour of the cylindrical pushing member pivots 41c. The second guiding device member further comprises a radially outward projecting rim as a second guiding device member abutment 52b to allow the first guiding device member 51 to abut against the second guiding device member abutment 52b when connected to the second guiding device member 5b in a final position. Accordingly, the cylindrical pushing member pivots 41c as per Figure 2, are allowed to be sandwiched between the second guiding device member pivots 51b and the first guiding device member recesses 51a in a connected state of the first and second guiding device members 5a, 5b.

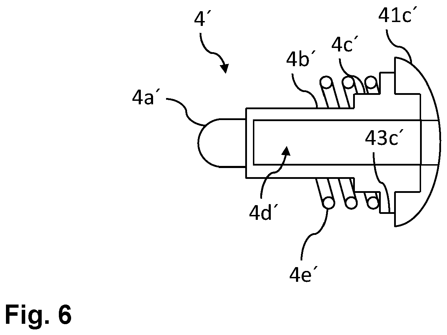

**Figure** 6 shows a schematic cross-sectional top view of the pushing member 4' according to another exemplary embodiment of the present invention. The description of the features of the embodiment according to Figures 2 and 3 also applies here for the pushing member head 4a', the pushing member body 4b' and the pushing member opening 4d'. However, the present embodiment according to Figure 5 differs in the pushing member pivot portion 4c'. The pushing member pivot portion 4c' comprises a pushing member pivot 41c', which is formed as a spherical portion forming a ball joint or at least a ball joint section. The spherical portion is formed with the pushing member longitudinal axis as symmetry axis. The pushing member pivot 41c' is releasable attachable to the pushing member pivot portion 4c'. The pushing member pivot portion 4c' further comprises a pushing member abutment 43c' formed as a radially outwardly projecting rim with respect to the longitudinal axis of the pushing member 4'. A spring member 4e' of the pushing member is configured to be arranged between the abutment and another opposed support, here, a radially extending rim of a guiding device, in which the pushing member 4' is at least partially to be received. Accordingly, the pushing member pivot 41c' is biased in the longitudinal direction of the pushing member 4' to be in contact with a supporting surface of a guiding device or the spindle nut 6 for a tilting movement along the supporting surface.

### LIST OF REFERENCE SIGNS

- 1: electro-mechanical actuator assembly
- 2: electric motor (driving device)
- 3: spindle (rotary drive)
- 4, 4': pushing member
- 4a, 4a': pushing member head
- 4b, 4b': pushing member body
- 4c, 4c': pushing member pivot portion
- 4d, 4d': pushing member opening
- 4e': spring member
- 5: guiding device
- 5a: first guiding device member
- 5b: second guiding device member
- 6: spindle nut
- 7a, 7b: support pin
- 8a, 8b: axial bearing
- 9: bi-stable brake (locking unit)
- 10: motor shaft (driving device shaft)
- 11a, 11b: motor shaft bearing
- 12: spindle bearing
- 13: drive gear
- 14: driven gear
- 15: spindle support bearing
- 16: spindle support bearing support
- 17: pivot axis
- 18: housing
- 19: guiding groove
- 20: brake lever (brake actuator)
- 21: pivot axis
- 30a, 30b: electronic control unit (control device)
- 41c, 41c': pushing member pivot
- 42c: pushing member pivot recess
- 51a: first guiding device member recess
- 51b: second guiding device member pivot
- 52b: second guiding device member abutment
- 60: brake caliper
- 100, 100': brake assembly
- L1: first longitudinal axis
- L2: second longitudinal axis

## Claims

1. Electro-mechanical actuator assembly (1) for actuating a brake actuator (20), comprising:
an actuation mechanism (3, 6) configured to convert a rotational driving movement into a translational driven movement in a direction of a first longitudinal axis (L1), and
a transfer mechanism (4, 4', 5) operatively coupled to the actuation mechanism (3, 6) to receive and transfer the translational driven movement at least in the direction of the first longitudinal axis (L1),
wherein the actuation mechanism (3, 6) is a spindle-spindle nut mechanism, wherein a spindle (3) of the spindle-spindle nut mechanism extends along the first longitudinal axis (L1)_and is rotationally supported about the first longitudinal axis (L1) while being axially fixed, and wherein the spindle nut (6) is configured to be axially moveable with respect to the first longitudinal axis (L1) while being rotationally fixed,
wherein the spindle (3) is operatively connected to a driving device (2) to be driven by the driving device (2) directly or via at least one gear stage (13, 14) arranged between the driving device (2) and the spindle (3), and wherein
the driving device (2) comprises a driving device shaft (10) extending in a direction of a second longitudinal axis (L2), wherein
the driving device shaft (10) and the spindle (3) extend substantially in one plane, **characterized in that**
the electro-mechanical actuator assembly (1) further comprises at least two control devices (30a, 30b) arranged laterally to the plane to be placed sidewise on the electro-mechanical actuator assembly (100), arranged on opposite sides of the plane, and operatively connected to the driving device (2).

2. Electro-mechanical actuator assembly (1) according to claim 1, wherein the spindle-spindle nut mechanism (3, 6) is a ball screw.

3. Electro-mechanical actuator assembly (1) according to claim 1 or 2, wherein the driving device (2) is an electric motor.

4. Electro-mechanical actuator assembly (1) according to any one of the preceding claims, wherein the second longitudinal axis (L2) extends in parallel to the first longitudinal axis (L1).

5. Electro-mechanical actuator assembly (1) according to any one of the preceding claims, wherein the driving device shaft (10) at least partially overlaps the spindle (3) in the direction of the second longitudinal axis (L2).

6. Electro-mechanical actuator assembly (1) according to any one of the preceding claims, wherein the electro-mechanical actuator assembly (1) further comprises a locking unit (9), preferably an electro-mechanical linear actuator or a locking clutch, more preferably a bi-stable brake, configured and controlled to lock the driving device shaft (10) against a rotational movement.

7. Electro-mechanical actuator assembly (1) according to claim 6, wherein at least one of the at least two control device (30a, 30b) is operatively connected to the locking unit (9).

8. Electro-mechanical actuator assembly (1) according to any one of the preceding claims, wherein at least one of the at least two control devices (30a, 30b) is a control unit configured to control operatively connected components, and the other at least one of the at least two control devices (30a, 30b) is a power control unit configured to control a power supply to operatively connected components.

9. Electro-mechanical actuator assembly (1) according to any one of the preceding claims, wherein the transfer mechanism (4, 4', 5) comprises at least one pushing member (4, 4') having a pushing member pivot portion (4c, 4c') configured to allow a tilting movement of the pushing member (4, 4') about a pivot axis (17) inclined to the first longitudinal axis (L1).

10. Electro-mechanical actuator assembly (1) according to claim 8, wherein the transfer mechanism (4, 4', 5) comprises a guiding device (5) configured to at least partially receive and support the pushing member pivot portion (4c, 4c') and to translationally move the pushing member (4, 4') in accordance with the driven translational movement by the actuation mechanism (3, 6).

11. Electro-mechanical actuator assembly (1) according to claim 9, wherein the guiding device (5) comprises at least one axial bearing (8a, 8b) arranged at a radial outer surface of the guiding device (5) and configured for a guided axial movement of the guiding device (5) with respect to the first longitudinal axis (L1).

12. Brake assembly (100, 100'), comprising:
at least one electro-mechanical actuator assembly (1) according to any one of the preceding claims, and
at least one brake actuator (20) configured to actuate or release a brake upon being actuated by the electro-mechanical actuator assembly (1).

13. Brake assembly (100, 100') according to claim 12, wherein the brake assembly (100, 100') further comprises a brake caliper (60) actuatable by the at least one brake actuator (20), wherein the at least one brake caliper provides a braking plane extending in a direction substantially perpendicular to a braking movement, and wherein the at least one electro-mechanical actuator assembly (1) is arranged with the first longitudinal axis (L1) substantially perpendicular to the braking plane, preferably in a symmetry plane of the brake caliper (60), with the at least one brake actuator (20) disposed between the at least one electro-mechanical actuator assembly (1) and the brake caliper (60) or inside the brake caliper (60).

14. Vehicle comprising at least one electro-mechanical actuator assembly (1) according to any one of the claims 1 to 11 and/or a brake assembly (100, 100') according to claim 12 or 13, wherein the vehicle is a commercial vehicle and/or an electrically powered or hybrid vehicle.

## Patentansprüche

1. Elektromechanische Betätigungsvorrichtungsanordnung (1) zum Betätigen einer Bremsbetätigungsvorrichtung (20), umfassend:
einen Betätigungsmechanismus (3, 6), der so konfiguriert ist, dass er eine drehende Antriebsbewegung in eine translatorische Antriebsbewegung in einer Richtung einer ersten Längsachse (L1) umwandelt, und
einen Übertragungsmechanismus (4, 4', 5), der betriebsmäßig mit dem Betätigungsmechanismus (3, 6) gekoppelt ist, um die translatorische Antriebsbewegung aufzunehmen und mindestens in der Richtung der ersten Längsachse (L1) zu übertragen,
wobei der Betätigungsmechanismus (3, 6) ein Spindel-Spindelmutter-Mechanismus ist, wobei sich eine Spindel (3) des Spindel-Spindelmutter-Mechanismus entlang der ersten Längsachse (L1) erstreckt und um die erste Längsachse (L1) drehbar gelagert ist, während sie axial fixiert ist, und wobei die Spindelmutter (6) so konfiguriert ist, dass sie in Bezug auf die erste Längsachse (L1) axial beweglich ist, während sie in Drehrichtung fixiert ist,
wobei die Spindel (3) betriebsmäßig mit einer Antriebsvorrichtung (2) verbunden ist, um von der Antriebsvorrichtung (2) direkt oder über mindestens eine Getriebestufe (13, 14), die zwischen der Antriebsvorrichtung (2) und der Spindel (3) angeordnet ist, angetrieben zu werden, und wobei
die Antriebsvorrichtung (2) eine Antriebsvorrichtungswelle (10) umfasst, die sich in einer Richtung einer zweiten Längsachse (L2) erstreckt, wobei
die sich Antriebsvorrichtungswelle (10) und die Spindel (3) im Wesentlichen in einer Ebene erstrecken, **dadurch gekennzeichnet, dass**
die elektromechanische Betätigungsvorrichtungsanordnung (1) weiter mindestens zwei Steuervorrichtungen (30a, 30b), umfasst, die seitlich zur Ebene angeordnet sind, um seitlich auf der elektromechanischen Betätigungsvorrichtungsanordnung (100) platziert zu werden, und an gegenüberliegenden Seiten der Ebene angeordnet und betriebsmäßig mit der Antriebseinrichtung (2) verbunden sind.

2. Elektromechanische Betätigungsvorrichtungsanordnung (1) nach Anspruch 1, wobei der Spindel-Spindelmutter-Mechanismus (3, 6) eine Kugelgewindespindel ist.

3. Elektromechanische Betätigungsvorrichtungsanordnung (1) nach Anspruch 1 oder 2, wobei die Antriebsvorrichtung (2) ein Elektromotor ist.

4. Elektromechanische Betätigungsvorrichtungsanordnung (1) nach einem der vorstehenden Ansprüche, wobei sich die zweite Längsachse (L2) parallel zur ersten Längsachse (L1) erstreckt.

5. Elektromechanische Betätigungsvorrichtungsanordnung (1) nach einem der vorstehenden Ansprüche, wobei die Antriebsvorrichtungswelle (10) die Spindel (3) in der Richtung der zweiten Längsachse (L2) mindestens teilweise überlappt.

6. Elektromechanische Betätigungsvorrichtungsanordnung (1) nach einem der vorstehenden Ansprüche, wobei die elektromechanische Betätigungsvorrichtungsanordnung (1) weiter eine Sperreinheit (9), vorzugsweise eine elektromechanische Linearbetätigungsvorrichtung oder eine Sperrkupplung, bevorzugter eine bistabile Bremse umfasst, die so konfiguriert ist und gesteuert wird, dass sie die Antriebsvorrichtungswelle (10) gegen eine Drehbewegung sperrt.

7. Elektromechanische Betätigungsvorrichtungsanordnung (1) nach Anspruch 6, wobei mindestens eine der mindestens zwei Steuervorrichtungen (30a, 30b) mit der Sperreinheit (9) betriebsmäßig verbunden ist.

8. Elektromechanische Betätigungsvorrichtungsanordnung (1) nach einem der vorstehenden Ansprüche, wobei mindestens eine der mindestens zwei Steuervorrichtungen (30a, 30b) eine Steuereinheit ist, die so konfiguriert ist, dass sie betriebsmäßig verbundene Komponenten steuert, und die andere mindestens eine der mindestens zwei Steuervorrichtungen (30a, 30b) eine Leistungssteuereinheit ist, die so konfiguriert ist, dass sie eine Leistungsabgabe an betriebsmäßig verbundene Komponenten steuert.

9. Elektromechanische Betätigungsvorrichtungsanordnung (1) nach einem der vorstehenden Ansprüche, wobei der Übertragungsmechanismus (4, 4', 5) mindestens ein Schubelement (4, 4') umfasst, das einen Schubelement-Schwenkabschnitt (4c, 4c') aufweist, der so konfiguriert ist, dass er Kippbewegung des Schubelements (4, 4') um eine zur ersten Längsachse (L1) geneigte Schwenkachse (17) ermöglicht.

10. Elektromechanische Betätigungsvorrichtungsanordnung (1) nach Anspruch 8, wobei der Übertragungsmechanismus (4, 4', 5) eine Führungsvorrichtung (5) umfasst, die so konfiguriert ist, dass sie den Schubelement-Schwenkabschnitt (4c, 4c') mindestens teilweise aufnimmt und stützt und das Schubelement (4, 4') gemäß der translatorischen Antriebsbewegung durch den Betätigungsmechanismus (3, 6) translatorisch bewegt.

11. Elektromechanische Betätigungsvorrichtungsanordnung (1) nach Anspruch 9, wobei die Führungsvorrichtung (5) mindestens ein Axiallager (8a, 8b) umfasst, das an einer radialen Außenfläche der Führungsvorrichtung (5) angeordnet ist und für eine geführte Axialbewegung der Führungsvorrichtung (5) in Bezug auf die erste Längsachse (L1) konfiguriert ist.

12. Bremsanordnung (100, 100'), umfassend:
mindestens eine elektromechanische Betätigungsvorrichtungsanordnung (1) nach einem der vorstehenden Ansprüche, und
mindestens eine Bremsbetätigungsvorrichtung (20), die so konfiguriert ist, dass sie eine Bremse betätigt oder löst, wenn sie durch die elektromechanische Betätigungsvorrichtungsanordnung (1) betätigt wird.

13. Bremsanordnung (100, 100') nach Anspruch 12, wobei die Bremsanordnung (100, 100') weiter einen Bremssattel (60) umfasst, der durch die mindestens eine Bremsbetätigungsvorrichtung (20) betätigt werden kann, wobei der mindestens eine Bremssattel eine Bremsfläche bereitstellt, die sich in einer im Wesentlichen zu einer Bremsbewegung senkrechten Richtung erstreckt, und wobei die mindestens eine elektromechanische Betätigungsvorrichtungsanordnung (1) mit der ersten Längsachse (L1) im Wesentlichen senkrecht zur Bremsfläche, vorzugsweise in einer Symmetrieebene des Bremssattels (60), angeordnet ist, wobei die mindestens eine Betätigungsvorrichtung (20) zwischen der mindestens einen elektromechanischen Betätigungsvorrichtungsanordnung (1) und dem Bremssattel (60) oder innerhalb des Bremssattels (60) angeordnet ist.

14. Fahrzeug, das mindestens eine elektromechanische Betätigungsvorrichtungsanordnung (1) nach einem der Ansprüche 1 bis 11 und/oder eine Bremsanordnung (100, 100') nach Anspruch 12 oder 13 umfasst, wobei das Fahrzeug ein Nutzfahrzeug und/oder ein elektrisch betriebenes oder ein Hybridfahrzeug ist.

## Revendications

1. Ensemble d'actionneur électromécanique (1) pour actionner un actionneur de frein (20), comprenant :
un mécanisme d'actionnement (3, 6) configuré pour convertir un mouvement d'entraînement rotatif en un mouvement d'entraînement de translation dans une direction d'un premier axe longitudinal (L1), et
un mécanisme de transfert (4, 4', 5) couplé fonctionnellement au mécanisme d'actionnement (3, 6) pour recevoir et transférer le mouvement d'entraînement de translation au moins dans la direction du premier axe longitudinal (L1),
dans lequel le mécanisme d'actionnement (3, 6) est un mécanisme broche-écrou de broche, dans lequel une broche (3) du mécanisme broche-écrou de broche s'étend le long du premier axe longitudinal (L1) et est supportée en rotation autour du premier axe longitudinal (L1) tout en étant fixée axialement, et dans lequel l'écrou de broche (6) est configuré pour être mobile axialement par rapport au premier axe longitudinal (L1) tout en étant fixé en rotation,
dans lequel la broche (3) est fonctionnellement connectée à un dispositif d'entraînement (2), pour être entraînée par le dispositif d'entraînement (2) directement ou par l'intermédiaire d'au moins un étage d'engrenage (13, 14) agencé entre le dispositif d'entraînement (2) et la broche (3), et dans lequel
le dispositif d'entraînement (2) comprend un arbre de dispositif d'entraînement (10) s'étendant dans une direction d'un second axe longitudinal (L2), dans lequel
l'arbre de dispositif d'entraînement (10) et la broche (3) s'étendent sensiblement dans un plan, **caractérisé en ce que**
l'ensemble d'actionneur électromécanique (1) comprend en outre au moins deux dispositifs de commande (30a, 30b) agencés latéralement au plan à placer latéralement sur l'ensemble d'actionneur électromécanique (100), agencés sur des côtés opposés du plan, et connectés fonctionnellement au dispositif d'entraînement (2).

2. Ensemble d'actionneur électromécanique (1) selon la revendication 1, dans lequel le mécanisme broche-écrou de broche (3, 6) est une vis à billes.

3. Ensemble d'actionneur électromécanique (1) selon la revendication 1 ou 2, dans lequel le dispositif d'entraînement (2) est un moteur électrique.

4. Ensemble d'actionneur électromécanique (1) selon l'une quelconque des revendications précédentes, dans lequel le second axe longitudinal (L2) s'étend parallèlement au premier axe longitudinal (L1).

5. Ensemble d'actionneur électromécanique (1) selon l'une quelconque des revendications précédentes, dans lequel l'arbre de dispositif d'entraînement (10) chevauche au moins partiellement la broche (3) dans la direction du second axe longitudinal (L2).

6. Ensemble d'actionneur électromécanique (1) selon l'une quelconque des revendications précédentes, dans lequel l'ensemble d'actionneur électromécanique (1) comprend en outre une unité de verrouillage (9), de préférence un actionneur linéaire électromécanique ou un embrayage de verrouillage, plus préférentiellement un frein bistable, configuré et commandé pour verrouiller l'arbre de dispositif d'entraînement (10) contre un mouvement de rotation.

7. Ensemble d'actionneur électromécanique (1) selon la revendication 6, dans lequel au moins un parmi les au moins deux dispositifs de commande (30a, 30b) est connecté fonctionnellement à l'unité de verrouillage (9).

8. Ensemble d'actionneur électromécanique (1) selon l'une quelconque des revendications précédentes, dans lequel au moins un parmi les au moins deux dispositifs de commande (30a, 30b) est une unité de commande configurée pour commander des composants connectés fonctionnellement, et l'autre au moins un parmi les au moins deux dispositifs de commande (30a, 30b) est une unité de commande de puissance configurée pour commander une alimentation électrique pour des composants connectés fonctionnellement.

9. Ensemble d'actionneur électromécanique (1) selon l'une quelconque des revendications précédentes, dans lequel le mécanisme de transfert (4, 4', 5) comprend au moins un organe de poussée (4, 4') présentant une portion de pivot d'organe de poussée (4c, 4c') configurée pour permettre un mouvement d'inclinaison de l'organe de poussée (4, 4') autour d'un axe de pivot (17) incliné par rapport au premier axe longitudinal (L1).

10. Ensemble d'actionneur électromécanique (1) selon la revendication 8, dans lequel le mécanisme de transfert (4, 4', 5) comprend un dispositif de guidage (5) configuré pour au moins partiellement recevoir et supporter la portion de pivot d'organe de poussée (4c, 4c') et pour déplacer en translation l'organe de poussée (4, 4') conformément au mouvement de translation entraîné par le mécanisme d'actionnement (3, 6).

11. Ensemble d'actionneur électromécanique (1) selon la revendication 9, dans lequel le dispositif de guidage (5) comprend au moins un palier axial (8a, 8b) agencé au niveau d'une surface extérieure radiale du dispositif de guidage (5) et configuré pour un mouvement axial guidé du dispositif de guidage (5) par rapport au premier axe longitudinal (L1).

12. Ensemble de frein (100, 100'), comprenant :
au moins un ensemble d'actionneur électromécanique (1) selon l'une quelconque des revendications précédentes, et
au moins un actionneur de frein (20) configuré pour actionner ou relâcher un frein lorsqu'il est actionné par l'ensemble d'actionneur électromécanique (1).

13. Ensemble de frein (100, 100') selon la revendication 12, dans lequel l'ensemble de frein (100, 100') comprend en outre un étrier de frein (60) actionnable par l'au moins un actionneur de frein (20), dans lequel l'au moins un étrier de frein fournit un plan de freinage s'étendant dans une direction sensiblement perpendiculaire à un mouvement de freinage, et dans lequel l'au moins un ensemble d'actionneur électromécanique (1) est agencé avec le premier axe longitudinal (L1) sensiblement perpendiculaire au plan de freinage, de préférence dans un plan de symétrie de l'étrier de frein (60), avec l'au moins un actionneur de frein (20) disposé entre l'au moins un ensemble d'actionneur électromécanique (1) et l'étrier de frein (60) ou à l'intérieur de l'étrier de frein (60).

14. Véhicule comprenant au moins un ensemble d'actionneur électromécanique (1) selon l'une quelconque des revendications 1 à 11 et/ou un ensemble de frein (100, 100') selon la revendication 12 ou 13, dans lequel le véhicule est un véhicule commercial et/ou un véhicule électrique ou hybride.
